# EUROPÄISCHE PATENTSCHRIFT

(11) **EP 0 663 517 B1**
(45) Veröffentlichungstag und Bekanntmachung des Hinweises auf die Patenterteilung: **22.01.1997**
(21) Anmeldenummer: 94119474.8
(22) Anmeldetag: 09.12.1994
(51) Int. Cl.: F02B 37/18, F02B 37/02, F01N 7/10

(54) **Abgasanlage für eine aufgeladene Brennkraftmaschine**
Exhaust system for a supercharged internal combustion engine
Système d'échappement pour un moteur à combustion interne suralimenté

(30) Priorität: 14.12.1993 DE 4342572
(43) Veröffentlichungstag der Anmeldung: 19.07.1995
(73) Patentinhaber: MTU MOTOREN- UND TURBINEN-UNION FRIEDRICHSHAFEN GMBH, D-88045 Friedrichshafen (DE)
(72) Erfinder: Ruetz, Georg, D-88090 Immenstaad (DE)

(56) Entgegenhaltungen:
- CH-A- 188 402
- CH-A- 627 821
- DE-A- 3 629 841

## Beschreibung

Es ist bekannt, bei Stoßaufladung die einzelnen Motorzylinder einer Brennkraftmaschine in Abhängigkeit von der Zündfolge so zu Gruppen zusammenzufassen, daß sich die Druckwellen ungestört ausbilden können. Bei Motoren mit größerer Zylinderzahl sind deshalb mehrere getrennte Abgasleitungen und damit verbundene separate Turbinenfluten der Abgasturbolader nötig, damit sich die Druckstöße in den Abgasleitungen voll ausbilden können.

Bei einer Abgasleitung nach der CH-A-627 821, die als nächstkommender Stand der Technik angesehen wird, sind die entsprechenden Abgasleitungen in einem gasdichten, wassergekühlten Gehäuse angeordnet. Die Abgasrohre bestehen aus einzelnen mit Steckverbindungen zusammengesetzten Rohrabschnitten. Die Steckverbindungen sind ohne Dichtungen ausgeführt. In den Undichtigkeiten austretendes Abgas wird in dem von Gehäuse und Abgasrohren gebildeten Zwischenraum zurückgehalten. Nachdem sich in dem Zwischenraum ein entsprechender Druck aufgebaut hat, wird ein weiteres Abströmen von Abgas aus den Abgasrohren verhindert.

In der DE-A-36 29 841 ist ebenfalls eine Abgasanlage für Stoßaufladung einer Brennkraftmaschine vorgesehen. Jeweils drei Zylinder der Brennkraftmaschine sind mit einer Abgasleitung verbunden, die zu separaten Turbinen zweier Abgasturbolader führen. Von den Abgasleitungen zweigen stromauf der Turbinen Umgehungsleitungen ab, die in ein gemeinsames Abblaseventil einmünden. Vom Abblaseventil führt eine gemeinsame Umgehungsleitung in eine gemeinsame, mit den Auslaßstutzen der Turbinen verbundene Leitung. Das Abblaseventil ermöglicht es, Abgas an den Turbinen vorbeizuführen. Um bei Teillast ein gutes Beschleunigungsverhalten des Abgasturboladers zu erhalten ist nämlich die Verwendung von engen Turbinenquerschnitten nötig. Das führt dazu, daß bei hoher Last ein Teil des Abgases ungenutzt an der Turbine vorbeizuführen ist, um, unter Beibehaltung der beschleunigungsoptimierten Ausbildung von Abgasrohren und Abgasturboladern auch im Vollastpunkt gute Motorbetriebswerte zu erhalten. Das aufgezeigte Abblaseventil ermöglicht es, die Umgehungsleitungen strömungstechnisch voneinander getrennt zu führen, so daß gewährleistet ist, daß die Spülvorgänge nicht durch Druckstöße gerade ausschiebender Zylinder gestört werden.

Auch bei der Brennkraftmaschine nach der CH-A-188 402 werden die Abgase einer Turbine zugeführt, um ihren Energieinhalt auszunutzen. Um die Druckschwankungen in der zur Turbine führenden Abgasleitung auszugleichen, ist ein Ausgleichsraum vorgesehen, in den bei jedem Auspuffsstoß ein Teil der Abgase abströmt. Es ist jedoch kein Abblaseventil vorgesehen. Zum Ableiten von sich aus den Abgasen absetzenden Unreinigkeiten ist allerdings ein Ventil angebracht, das während des Betriebs ständig geöffnet ist. Außerdem ist der Ausgleichsraum mit einer Leitung und einer darin befindlichen Klappe versehen, die jedoch nur beim Anstellen und Abstellen der Turbine geöffnet wird, und jedenfalls nicht zur Turbinenregelung dient.

Der im Patentanspruch 1 angegebenen Erfindung liegt das Problem zugrunde, für eine mehrwandige Abgasanlage eine einfache Einrichtung für das Abblasen von Abgas anzugeben, durch die die Stoßaufladung nicht behindert wird.

Dieses Problem wird durch die im Patentanspruch 1 angeführten Merkmale gelöst. Das Abblasen von Abgas erfolgt aus einem von den abgasführenden Bauteilen und dem Gehäuse gebildeten Zwischenraum. Durch Öffnungen in den abgasführenden Bauteilen baut sich im Zwischenraum ungefähr der mittlere Druck vor Turbine auf Wegen des geringen Druckgefälles gegenüber dem in den abgasführenden Bauteilen herrschenden pulsierenden Druck sind die Verluste in den Öffnungen minimal, das heißt, die Stoßaufladung wird nicht gestört. Wenn zur Ladedruckbegrenzung die Turbinenleistung reduziert werden soll, wird der Druck im Zwischenraum durch öffnen des Abblaseventils abgesenkt. Durch das Druckgefälle wird ein Abblasen von Abgas erzielt. Bei dieser Abgasanlage können entsprechend Anspruch 2, die zu den Turbinen führenden Abgasleitungen allein innerhalb des Gehäuse angeordnet sein. Es können aber auch nur die Turbinen nach Anspruch 3 oder auch sowohl die zu den Turbinen führenden Abgasleitungen wie auch die Turbinen nach Anspruch 4 im Gehäuse angeordnet sein. Günstig ist es nach Anspruch 5, das Abblaseventil in unmittelbarer Nähe zum Auslaß der Turbinen im Gehäuse anzuordnen, wodurch lange Umgehungsleitungen vermieden werden. Sind die abgasführenden Bauteile, insbesondere die Abgasleitungen nach Anspruch 6 mit Steckverbindungen ausgeführt, so kann Abgas aus den Abgasleitungen über Undichtigkeiten in den Steckverbindungen in den Zwischenraum austreten. Zweckmäßig kann es auch sein, besondere Bohrungen nach Anspruch 7 vorzusehen, die als Abgasübertritte dienen können. Die Bohrungen in den beiden Abgasleitungen sollen so angeordnet sein, daß die Stoßaufladung nicht gestört wird. Dies kann nach Anspruch 8 dadurch erfolgen, daß die Bohrungen von einander abgewandt liegend angeordnet sind oder nach Anspruch 9 weit auseinander liegen. Besonders vorteilhaft ist es, wenn die Bohrungen in unmittelbarer Nähe zum Auslaß zur Umgehungsleitung liegen, weil dann die abzublasende Abgasmenge unmittelbar in die Umgehungsleitung eintritt, ohne starke Strömungsbewegungen in den entfernteren Bereichen des Zwischenraums zu verursachen. Starke Strömungsbewegungen sind unerwünscht, weil dadurch mehr Wärme in das gekühlte Gehäuse übergeht und damit der Energieinhalt des Abgasstroms sinkt.

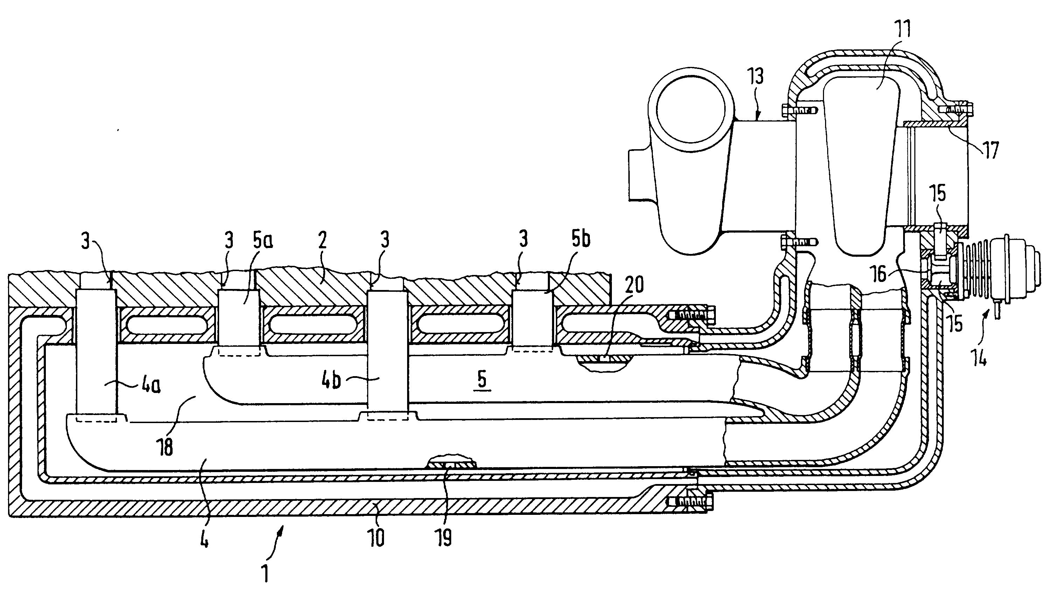

Ein Ausführungsbeispiel der Erfindung ist in der Zeichnung dargestellt und wird im folgenden näher beschrieben. Es zeigt die einzige Figur, eine Ansicht einer Abgasanlage im Längsschnitt, wobei eine mehrflutige Turbine und die zu ihr führenden Abgasleitungen innerhalb eines gekühlten Gehäuses angeordnet sind.

Bei der in der Figur im Längsschnitt dargestellten Abgasanlage 1 sind jeweils die Zylinderauslässe 3 zweier Zylinder einer Brennkraftmaschine an getrennte Abgasrohre 4 bzw. 5 angeschlossen. Je nach Motortyp können natürlich auch drei oder vier Zylinder einer Brennkraftmaschine zu Gruppen zusammengefaßt sein. Jedoch dürfen die Abgasrohre jeweils nur solche Zylinder miteinander verbinden, die nicht gleichzeitig auspuffen oder deren Auslaßventilöffnungszeiten sich nur wenig überschneiden. Beim Ausführungsbeispiel nach der Figur sind die Abgasrohre 4 bzw. 5 mit unterschiedlichen Fluten einer zweiflutigen Turbine 11 eines Abgasturboladers 13 verbunden. Je nach Bedarf kann die Turbine 11 auch mit mehr als zwei Fluten ausgebildet sein, und es können mehrere ein- oder mehrflutige Turbinen verwendet werden. Die Abgasrohre 4 und 5 und die das Abgas von den Zylinderauslässen 3 des Zylinderkopfs 2 in die Abgasrohre überleitenden Anschlußrohre 4a, 4b, 5a, 5b sind ebenso wie die Turbine 11 innerhalb eines wassergekühlten Gehäuses 10 angeordnet. Eine derartige Abgasanlage mit Anordnung entsprechender abgasführender Bauteile innerhalb eines wassergekühlten Gehäuses 10 hat den Zweck, die heißen Abgase vor Energieverlust durch Wärmeabstrahlung und Konvektion zu schützen und die Außenwandtemperatur der Abgasanlage niedrig zu halten, wobei der Zwischenraum 18 zwischen Abgasrohren 4, 5 und Gehäuse 10 isolierend wirkt. Da das an den Zylinderkopf 2 angebaute Gehäuse 10 abgasdicht ausgeführt ist, ergibt sich weiter der Vorteil, daß die Abgasleitungen ohne besondere Dichtungen ausgeführt sein können. Die Abgasrohre 4, 5 und die Anschlußrohre 4a, 4b, 5a, 5b können beispielsweise aus ineinandergesteckten Rohrstücken gebildet sein. Über die Undichtigkeiten in den Steckverbindungen kann in den Zwischenraum 18 Abgas austreten. Es baut sich dort ein Druck auf, der etwa dem mittleren Druck des Abgases vor der Turbine 11 entspricht. Aufgrund des geringen Druckgefälles wird die Stoßaufladung nicht gestört. Wenn zur Ladedruckbegrenzung die Turbinenleistung reduziert werden muß, wird der Druck im Zwischenraum 18 abgesenkt. Dafür ist der Zwischenraum 18 über eine Umgehungsleitung 15 mit der Auslaßleitung 17 verbunden, die an den Auslaßstutzen der Turbine 11 anschließt. Im Teillastbereich verschließt das Sperrglied 16 des beispielsweise ladeluftdruckabhängig gesteuerten Abblaseventils 14 die Umgehungsleitung 15. Erst bei höherer Last, wenn das erhöhte Abgasangebot von der Turbine nicht mehr aufgenommen werden kann, öffnet das Abblaseventil 14 die Umgehungsleitung 15. Durch den absinkenden Druck im Zwischenraum entweicht über die Öffnungen in den Abgasleitungen ein Abgasstrom, der unter Umgehung der Turbine über die Umgehungsleitung 15 in die Auslaßleitung 17 der Turbine 11 gelangt. Um die Umgehungsleitung 15 kurz zu halten, ist es besonders günstig, wenn das Abblaseventil 14 unmittelbar im Bereich der Auslaßleitung 17 angeordnet ist. Die Umgehungsleitung 15 kann wie im Ausführungsbeispiel aus Kanälen in den Wänden des Gehäuses 10 bestehen.

Die Öffnungen in den Abgasleitungen für den Abgasübertritt in den Zwischenraum 18 können auch durch Bohrungen in den Abgasrohren dargestellt sein. Dabei ist darauf zu achten, daß die Bohrungen 19, 20 so angeordnet sind, daß diese die Stoßaufladung im Betrieb ohne Abblasen nicht stören. Sie können beispielsweise voneinander abgewandt liegend angeordnet sein, so daß der ausströmende Abgasstrom nicht gegen die jeweils andere Bohrung gerichtet ist. Die Bohrungen können auch weit auseinanderliegend angeordnet sein. Besonders vorteilhaft ist es, wenn die Bohrungen 19, 20 in unmittelbarer Nähe zum Auslaß zur Umgehungsleitung 15 angeordnet sind. Die abzublasende Abgasmenge entweicht dann unmittelbar in die Umgehungsleitung 15, ohne daß das Abgas in etwas entfernteren Bereichen des Zwischenraums beim Abblasen in allzu starke Bewegung gerät. Strömungsbewegungen des Abgases im Zwischenraum verstärken den Wärmeübergang zum gekühlten Gehäuse, was aber den Energieinhalt des Abgases in unerwünschter Weise herabsetzen würde.

Abweichend vom dargestellten Ausführungsbeispiel kann die Abgasturbine auch außerhalb des gekühlten Gehäuses 10 liegen.

Denkbar ist auch ein Ausführungsbeispiel, bei dem die Turbinen in einem von den Abgasleitungen getrennten separaten, gekühlten Gehäuse angeordnet sind, wobei die Umgehungsleitung 15 von dem von diesem Gehäuse umschlossenen Zwischenraum zur Auslaßleitung 17 führt.

## Patentansprüche

1. Aufgeladene Brennkraftmaschine mit Abgasturboladern (13) und mit abgasführenden Bauteilen, bestehend aus ein- oder mehrflutigen Turbinen (11) der Abgasturbolader (13) und Abgasleitungen, bestehend aus Abgasrohren (4, 5) mit Anschlußrohren (4a, 4b, 5a, 5b), die jeweils eine Gruppe von Zylindern der Brennkraftmaschine mit einer Flut der Turbinen (11) verbinden, wobei die abgasführenden Bauteile mindestens teilweise in einem gasdichten Gehäuse (10) angeordnet sind, wobei ferner die abgasführenden Bauteile mit Öffnungen versehen sind, über die in den Zwischenraum (18) zwischen den abgasführenden Bauteilen und dem Gehäuse (10) Abgas gelangt, und wobei das von den Turbinen (11) abströmende Abgas über eine Auslaßleitung (17) abgeleitet wird, dadurch gekennzeichnet, daß eine Umgehungsleitung (15) vorgesehen ist, die den Zwischenraum (18) mit der Auslaßleitung (17) verbindet, und daß in der Umgehungsleitung (15) ein Abblaseventil (14) angeordnet ist, das zur Ladedruckbegrenzung bei hohem Abgasangebot Abgas durch die Umgehungsleitung (15) hindurchtreten läßt.

2. Aufgeladene Brennkraftmaschine nach Anspruch 1, dadurch gekennzeichnet, daß die Abgasleitungen, bestehend aus zu den Turbinen (11) führenden Abgasrohren (4, 5) und Anschlußrohren (4a, 4b, 5a, 5b) innerhalb des Gehäuses (10) angeordnet sind.

3. Aufgeladene Brennkraftmaschine nach Anspruch 1, dadurch gekennzeichnet, daß die Turbinen (11) innerhalb des Gehäuses (10) angeordnet sind.

4. Aufgeladene Brennkraftmaschine nach Anspruch 1, dadurch gekennzeichnet, daß die Abgasleitungen wie die Turbinen (11) in dem Gehäuse (10) angeordnet sind.

5. Aufgeladene Brennkraftmaschine nach einem der Ansprüche 1 bis 4, dadurch gekennzeichnet, daß das Abblaseventil 1(14) in unmittelbarer Nähe zur Auslaßleitung (17) angeordnet ist.

6. Aufgeladene Brennkraftmaschine nach einem der Ansprüche 1 bis 5, dadurch gekennzeichnet, daß die abgasführenden Bauteile aus mit Steckverbindungen aufgebauten Rohrstücken gebildet sind.

7. Aufgeladene Brennkraftmaschine nach einem der Ansprüche 1 bis 6, dadurch gekennzeichnet, daß in den abgasführenden Bauteilen Bohrungen (19, 20) zum Abgasübertritt in den Zwischenraum (18) vorgesehen sind.

8. Aufgeladene Brennkraftmaschine nach Anspruch 7, dadurch gekennzeichnet, daß die Bohrungen (19, 20) voneinander abgewandt liegend angeordnet sind.

9. Aufgeladene Brennkraftmaschine nach Anspruch 7, dadurch gekennzeichnet, daß die Bohrungen (19, 20) weit auseinanderliegen.

10. Aufgeladene Brennkraftmaschine nach Anspruch 7 oder 8, dadurch gekennzeichnet, daß die Bohrungen (19, 20) in unmittelbarer Nähe zum Auslaß zur Umgehungsleitung (15) angeordnet sind.

## Claims

1. A forced-induction internal-combustion engine with exhaust-driven turbochargers (13) and with exhaust gas-conveying components, comprising single-flow or multiflow turbines (11) of the exhaust-driven turbochargers (13) and exhaust ducts, comprising exhaust pipes (4,5) with connecting pipes (4a,4b,5a,5b) which in each case connect a group of cylinders of the internal-combustion engine with one flow of the turbines (11), wherein the exhaust gas-conveying components are disposed at least partly in a gas-tight housing (10), wherein the exhaust gas-conveying components are provided with openings through which exhaust gas enters the space (18) between the exhaust gas-conveying components and the housing (10), and wherein the exhaust gas flowing from the turbines (11) is discharged via an outlet duct (17), characterised in that a by-pass duct (15) is provided which connects the space (18) with the outlet duct (17), and in that in the by-pass duct (15) there is disposed a blow-off valve (14) which allows exhaust gas to pass through the by-pass duct (15) for charge pressure limitation when there is high exhaust-gas supply.

2. A forced-induction internal-combustion engine according to Claim 1, characterised in that the exhaust ducts, comprising exhaust pipes (4,5) leading to the turbines (11) and connecting pipes (4a,4b,5a 5b) are disposed inside the housing (10).

3. A forced-induction internal-combustion engine according to Claim 1, characterised in that the turbines (11) are disposed inside the housing (10).

4. A forced-induction internal-combustion engine according to Claim 1, characterised in that, like the turbines (11), the exhaust ducts are disposed in the housing (10).

5. A forced-induction internal-combustion engine according to Claims 1 to 4, characterised in that the blowoff valve (14) is disposed in the immediate vicinity of the outlet duct (17).

6. A forced-induction internal-combustion engine according to any one of Claims 1 to 5, characterised in that the exhaust-conveying components are formed by pipe sections assembled with plug-type connections.

7. A forced-induction internal-combustion engine according to any one of Claims 1 to 6, characterised in that bores (19,20) for the exhaust gas overflow into the space (18) are provided in the exhaust-conveying components.

8. A forced-induction internal-combustion engine according to Claim 7, characterised in that the bores (19,20) are disposed horizontally and facing away from one another.

9. A forced-induction internal-combustion engine according to Claim 7, characterised in that the bores (19,20) are disposed far apart.

10. A forced-induction internal-combustion engine according to Claim 7 or 8, characterised in that the bores (19,20) are disposed in the immediate vicinity of the outlet to the by-pass duct (15).

## Revendications

1. Moteur à combustion interne suralimenté comportant des turbocompresseurs (13) à gaz d'échappement et des pièces structurelles guidant les gaz d'échappement, comprenant des turbines (11) des turbocompresseurs (13) à gaz d'échappement, à un ou plusieurs flux, et des conduits à gaz d'échappement comprenant des tubulures d'échappement (4, 5) associées à des tubulures de jonction (4a, 4b, 5a, 5b), qui raccordent respectivement un groupe de cylindres du moteur à combustion interne à un flux des turbines (11) ; les pièces structurelles guidant les gaz d'échappement étant logées, au moins en partie, dans un carter (10) étanche aux gaz ; les pièces structurelles guidant les gaz d'échappement étant, par ailleurs, pourvues d'orifices par l'intermédiaire desquels des gaz d'échappement parviennent dans l'espace intercalaire (18) situé entre le carter (10) et les pièces structurelles guidant les gaz d'échappement ; et les gaz d'échappement sortant des turbines (11) étant dérivés par l'intermédiaire d'un conduit de sortie (17), caractérisé par le fait qu'il est prévu un conduit de contournement (15) reliant l'espace intercalaire (18) au conduit de sortie (17) ; et par le fait que le conduit de contournement (15) renferme une soupape de décharge (14) qui fait circuler des gaz d'échappement par le conduit de contournement (15), afin de limiter la pression de suralimentation en cas d'apport intense de gaz d'échappement.

2. Moteur à combustion interne suralimenté selon la revendication 1, caractérisé par le fait que les conduits à gaz d'échappement, comprenant des tubulures d'échappement (4, 5) menant aux turbines (11) et des tubulures de jonction (4a, 4b, 5a, 5b), sont logés à l'intérieur du carter (10).

3. Moteur à combustion interne suralimenté selon la revendication 1, caractérisé par le fait que les turbines (11) sont logées à l'intérieur du carter (10).

4. Moteur à combustion interne suralimenté selon la revendication 1, caractérisé par le fait que les conduits à gaz d'échappement, comme les turbines (11), se trouvent dans le carter (10).

5. Moteur à combustion interne suralimenté selon l'une des revendications 1 à 4, caractérisé par le fait que la soupape de décharge (14) est située à proximité directe du conduit de sortie (17).

6. Moteur à combustion interne suralimenté selon l'une des revendications 1 à 5, caractérisé par le fait que les pièces structurelles guidant les gaz d'échappement sont formées par des pièces tubulaires équipées de solidarisations emboîtées.

7. Moteur à combustion interne suralimenté selon l'une des revendications 1 à 6, caractérisé par le fait que des perçages (19, 20) sont prévus dans les pièces structurelles guidant les gaz d'échappement, en vue du transfert des gaz d'échappement dans l'espace intercalaire (18).

8. Moteur à combustion interne suralimenté selon la revendication 7, caractérisé par le fait que les perçages (19, 20) sont agencés à l'opposé les uns des autres.

9. Moteur à combustion interne suralimenté selon la revendication 7, caractérisé par le fait que les perçages (19, 20) sont largement éloignés les uns des autres.

10. Moteur à combustion interne suralimenté selon la revendication 7 ou 8, caractérisé par le fait que les perçages (19, 20) se trouvent à proximité directe de la sortie vers le conduit de contournement (15).
